# EUROPEAN PATENT APPLICATION

(11) **EP 3 667 787 A1**
(43) Date of publication of application: **17.06.2020**
(21) Application number: 18845240.3
(22) Date of filing: 31.07.2018
(51) Int. Cl.: H01M 8/0221, B29C 43/18, H01M 8/0226

(54) **FUEL CELL SEPARATOR CONDUCTIVE SHEET AND FUEL CELL SEPARATOR**

(30) Priority: 10.08.2017 JP 2017155564
(71) Applicant: Nisshinbo Holdings Inc., Tokyo 103-8650 (JP)
(72) Inventor: YASUDA Kosuke, Chiba-city Chiba 267-0056 (JP); OKEI Takehiro, Chiba-city Chiba 267-0056 (JP); ASHIZAKI Shoya, Chiba-city Chiba 267-0056 (JP)
(74) Representative: Mewburn Ellis LLP
(86) International application number: PCT/JP2018/028621
(87) International publication number: WO 2019/031304

(57) **Abstract**

Provided is a fuel cell separator conductive sheet comprising a conductive filler, first organic fibers, and second organic fibers, wherein the melting point of the first organic fibers is higher than a heating temperature at which the conductive sheet is shaped to produce a fuel cell separator, and the melting point of the second organic fibers is lower than the heating temperature.

## Description

### TECHNICAL FIELD

The present invention relates to a fuel cell separator conductive sheet and a fuel cell separator.

### BACKGROUND ART

A fuel cell separator plays a role of providing each unit cell with conductivity, a role of ensuring a passage of fuel and air (oxygen) supplied to each unit cell, and a role as a separation boundary wall between unit cells. For this reason, the separator is required to have various properties such as high conductivity, high gas impermeability, chemical stability, heat resistance, and hydrophilicity.

As a method for producing a fuel cell separator, there is a method in which a compound prepared by granulating a conductive filler and a binder resin is filled in a mold and then compression molded. However, the method faces the problem that the granulation step before the molding and the conveyance step take time, and the obtained separator is poor in strength and is easily broken (cannot be thinned) because the separator contains the conductive filler in a high proportion for obtaining conductivity.

In order to solve the above-described problem, a technique of incorporating a fibrous substance into the compound during granulation to reinforce the compound has been proposed (Patent Document 1). With such a method, however, there remain problems that fibers in the compound do not get entangled well because the fibrous substance cannot be dispersed uniformly, and that the moldability is worsened when the fibrous substance is increased to achieve such a strength that allows conveyance of a precursor in a sheet form.

### PRIOR ART DOCUMENTS

### PATENT DOCUMENTS

Patent Document 1: JP-A 2000-82476

### SUMMARY OF INVENTION

### TECHNICAL PROBLEM

The present invention has been made to solve the above-mentioned problems, and it is an object of the present invention to provide a fuel cell separator conductive sheet that is excellent in moldability at the time of production of a fuel cell separator, and has a strength that allows conveyance in the form of a sheet and is excellent in strength of a thinned separator after molding regardless of containing a fibrous substance, and a fuel cell separator obtained by using the fuel cell separator conductive sheet.

### SOLUTION TO PROBLEM

As a result of diligent studies to solve the above problems, the present inventors have found that the above problems can be solved by a conductive sheet containing a conductive filler and two kinds of organic fibers having different melting points, and accomplished the present invention.

That is, the present invention provides the following fuel cell separator conductive sheet and fuel cell separator.
1. A fuel cell separator conductive sheet including: a conductive filler; a first organic fiber; and a second organic fiber,
   wherein the first organic fiber has a melting point of higher than a heating temperature at which the conductive sheet is molded to produce a fuel cell separator, and
   the second organic fiber has a melting point of lower than the heating temperature.
2. The fuel cell separator conductive sheet according to 1, wherein the first organic fiber is at least one selected from aramid, cellulose, acetate and nylon polyester, and the second organic fiber is at least one selected from polyethylene, polypropylene and polyphenylene sulfide.
3. The fuel cell separator conductive sheet according to 1 or 2, wherein the conductive filler is artificial graphite.
4. The fuel cell separator conductive sheet according to any one of 1 to 3, wherein the conductive filler has an average particle size of 5 to 200 µm.
5. The fuel cell separator conductive sheet according to any one of 1 to 4, wherein the first organic fiber and the second organic fiber have an average fiber length of 0.1 to 10 mm, and an average fiber diameter of 0.1 to 100 µm.
6. The fuel cell separator conductive sheet according to any one of 1 to 5, further including a conductive auxiliary agent.
7. The fuel cell separator conductive sheet according to 6, wherein the conductive auxiliary agent is fibrous.
8. The fuel cell separator conductive sheet according to 7, wherein the conductive auxiliary agent has an average fiber length of 0.1 to 10 mm and an average fiber diameter of 3 to 50 µm.
9. A fuel cell separator precursor obtained from the fuel cell separator conductive sheet according to any one of 1 to 8.
10. A fuel cell separator precursor obtained by impregnating the fuel cell separator conductive sheet according to any one of 1 to 8 with a resin.
11. A fuel cell separator obtained from the fuel cell separator precursor according to 9 or 10.
12. A method for producing a fuel cell separator conductive sheet, including a step of papermaking from a composition containing a conductive filler, a first organic fiber, and a second organic fiber, the first organic fiber having a melting point higher than a melting point of the second organic fiber.
13. A method for producing a fuel cell separator precursor, including a step of compressing the fuel cell separator conductive sheet according to any one of 1 to 8.
14. A method for producing a fuel cell separator precursor, including a step of impregnating the fuel cell separator conductive sheet according to any one of 1 to 8 with a resin, and compressing the fuel cell separator conductive sheet.
15. A method for producing a fuel cell separator, including a step of molding the fuel cell separator precursor according to 9 or 10 while heating the fuel cell separator precursor to a temperature that is lower than the melting point of the first organic fiber and higher than the melting point of the second organic fiber.

### ADVANTAGEOUS EFFECTS OF INVENTION

Since the fuel cell separator conductive sheet of the present invention has excellent strength, roll conveyance of a material having a low basis weight, which has been impossible with the conventional production method, is enabled, and the cycle time can be reduced. In addition, since the fuel cell separator conductive sheet of the present invention contains a fibrous substance, it is possible to produce a thinned fuel cell separator using the conductive sheet, and it is possible to improve the brittle fracture resistance and the damage tolerance in addition to improving mechanical properties such as bending elasticity. Furthermore, the fuel cell separator conductive sheet of the present invention contains two kinds of organic fibers having different melting points, and by melting one of the organic fibers during molding, fluidization from the inside to a part of the matrix fibers can be made, and thus the moldability can be improved. Also, it is possible to eliminate variations in conductivity caused by uneven distribution or aggregation of the porous structure in the obtained fuel cell separator.

### DESCRIPTION OF EMBODIMENTS

### [Conductive sheet]

The fuel cell separator conductive sheet of the present invention (hereinafter also simply referred to as conductive sheet) includes a conductive filler, a first organic fiber, and a second organic fiber.

### [Conductive filler]

The conductive filler is not particularly limited, and conventionally known fillers for fuel cell separators can be used. Examples of the conductive filler include carbon materials, metal powders, and powders obtained by depositing or plating metal on inorganic powder or organic powder, and carbon materials are preferable. Examples of the carbon material include graphite such as natural graphite, artificial graphite obtained by baking acicular coke, artificial graphite obtained by baking massive coke and expanded graphite obtained by chemical treatment of natural graphite, pulverized carbon electrode, coal-based pitch, petroleum-based pitch, coke, activated carbon, glassy carbon, acetylene black, and ketjen black. Among these, as the conductive filler, graphite is preferable from the viewpoint of conductivity, and artificial graphite is more preferable. The conductive filler can be used singly or in combination of two or more.

The shape of the conductive filler is not particularly limited, and may be spherical, scaly, lump, foil, plate, needle, or amorphous. From the viewpoint of gas barrier properties of the separator, scaly is preferable. In particular, in the present invention, it is preferable to use scaly graphite as the conductive filler.

The average particle size of the conductive filler is preferably 5 to 200 µm, more preferably 20 to 80 µm. When the average particle size of the conductive filler is within the above range, required conductivity can be obtained while ensuring gas barrier properties. In the present invention, the average particle diameter is a median diameter (d₅₀) in particle size distribution measurement by a laser diffraction method.

The content of the conductive filler is preferably 50 to 96% by weight and more preferably 50 to 85% by weight in the conductive sheet of the present invention. When the content of the conductive filler is within the above range, required conductivity can be obtained as long as the moldability is not impaired.

### [First organic fiber and second organic fiber]

The first organic fiber has a melting point higher than a heating temperature at which the conductive sheet of the present invention is molded to produce a fuel cell separator, and the second organic fiber has a melting point lower than the heating temperature. At this time, the melting point of the first organic fiber is higher than the heating temperature preferably by 10°C or more, more preferably by 20°C or more, and further preferably by 30°C or more from the viewpoint of securely retaining the fiber form for imparting the impact resistance. The melting point of the second organic fiber is lower than the heating temperature preferably by 10°C or more, more preferably by 20°C or more, and further preferably by 30°C or more from the viewpoint of moldability. The temperature difference between the melting points of the first organic fiber and the second organic fiber is preferably 40°C or more, and more preferably 60°C or more.

The average fiber length of the first organic fiber and the second organic fiber is preferably 0.1 to 10 mm, more preferably 0.1 to 6 mm, and further preferably 0.5 to 6 mm from the viewpoint of ensuring the strength of the conductive sheet. The average fiber diameter of the first organic fiber and the second organic fiber is preferably 0.1 to 100 µm, more preferably 0.1 to 50 µm, and further preferably 1 to 50 µm from the viewpoint of moldability. In the present invention, the average fiber length and the average fiber diameter are arithmetic average values of the fiber length and the fiber diameter measured for any 100 fibers using an optical microscope or an electron microscope.

Examples of the material of the organic fibers include aramids such as poly p-phenylene terephthalamide (decomposition temperature 500°C), and poly m-phenylene isophthalamide (decomposition temperature 500°C), cellulose (melting point 260°C), acetate (melting point 260°C), nylon polyester (melting point 260°C), polyethylene (PE) (melting point 120 to 140°C (HDPE), 95 to 130°C (LDPE)), polypropylene (PP) (melting point 160°C), and polyphenylene sulfide (PPS) (melting point 280°C).

Among these, the first organic fiber is preferably aramid, cellulose, acetate, or nylon polyester, and at this time, the second organic fiber is preferably PE, PP, or PPS. However, when PE or PP is used as the second organic fiber, PPS may be used as the first organic fiber besides aramid, cellulose, acetate, and nylon polyester.

The content of the first organic fiber is preferably 1 to 15% by weight and more preferably 1 to 10% by weight in the conductive sheet of the present invention. When the content of the first organic fiber is within the above range, damage tolerance after molding can be imparted without impairing moldability. The first organic fiber can be used singly or in combination of two or more.

The content of the second organic fiber is preferably 0.1 to 25% by weight, more preferably 0.1 to 20% by weight in the conductive sheet of the present invention. When the content of the second organic fiber is within the above range, moldability can be imparted without deterioration in conductivity of the molded body. The second organic fiber can be used singly or in combination of two or more.

In addition, the content ratio of the second organic fiber to the first organic fiber is preferably 0.1 to 10, and more preferably 1 to 5, in terms of weight ratio. When the content ratio is in the above range, both the strength and moldability of the conductive sheet can be achieved. However, as is described later, when the conductive sheet is impregnated with a resin having compatibility or affinity with the second organic fiber to make a fuel cell separator precursor, the content of the second organic fiber in the conductive sheet is preferably 0.1 to 25% by weight, and more preferably 0.1 to 20% by weight.

### [Conductive auxiliary agent]

The fuel cell separator conductive sheet of the present invention may further contain a conductive auxiliary agent in order to reduce the resistance of the fuel cell separator to be obtained from the fuel cell separator conductive sheet. Examples of the conductive auxiliary agent include carbon fibers, carbon nanofibers, carbon nanotubes, various metal fibers, and fibers obtained by depositing or plating metal on inorganic fibers or organic fibers. Among these, fibrous carbon materials such as carbon fibers, carbon nanofibers, and carbon nanotubes are preferable from the viewpoint of corrosion resistance.

Examples of the carbon fibers include PAN-based carbon fibers made from polyacrylonitrile (PAN) fibers, pitch-based carbon fibers made from pitches such as petroleum pitch, and phenol-based carbon fibers made from phenolic resins. PAN-based carbon fibers are preferable from the viewpoint of cost.

The average fiber length of the fibrous conductive auxiliary agent is preferably 0.1 to 10 mm, more preferably 0.1 to 7 mm, and further preferably 0.1 to 5 mm from the viewpoint of achieving both moldability and conductivity. The average fiber diameter is preferably 3 to 50 µm, preferably 3 to 30 µm, and preferably 3 to 15 µm from the viewpoint of moldability.

The content of the conductive auxiliary agent is preferably 1 to 20% by weight, more preferably 3 to 10% by weight in the conductive sheet of the present invention. When the content of the conductive auxiliary agent is within the above range, required electroconductivity can be ensured without impairing moldability. The conductive auxiliary agent can be used singly or in combination of two or more.

### [Other ingredients]

The fuel cell separator conductive sheet of the present invention may contain other ingredients usually used for a fuel cell separator in addition to the ingredients described above. Examples of other ingredients include internal release agents such as stearic acid wax, amide wax, montanic acid wax, carnauba wax, and polyethylene wax, anionic, cationic or nonionic surfactants, known flocculants adjusted to the surfactants, such as strong acids, strong electrolytes, bases, polyacrylamides, sodium polyacrylates, polymethacrylates, and thickeners such as carboxymethylcellulose, starch, vinyl acetate, polylactic acid, polyglycolic acid, and polyethylene oxide. The content of these ingredients can be arbitrary as long as the effects of the present invention are not impaired.

The thickness of the fuel cell separator conductive sheet of the present invention is preferably about 0.2 to 1.0 mm.

### [Method for producing fuel cell separator conductive sheet]

Although the production method of the fuel cell separator conductive sheet of the present invention is not particularly limited, the papermaking method is preferable. The papermaking method is not particularly limited and may be a conventionally known method. For example, the conductive sheet of the present invention can be produced by dispersing a composition containing the above-described ingredients in a solvent that does not dissolve these ingredients, depositing the ingredients in the resulting dispersion on a substrate, and drying the resulting deposit. By producing a sheet by the papermaking method, the fibers can be uniformly dispersed in the sheet, and the fibers can be contained so that a papermaking sheet having sufficient strength is obtained.

In addition, the papermaking sheet has a strength capable of being conveyed despite having a low basis weight, and can improve the moldability when a fuel cell separator is produced using the papermaking sheet. Specifically, the conductive sheet of the present invention obtained by the papermaking method has sufficient strength even though the basis weight is as low as about 150 to 300 g/m².

### [Fuel cell separator precursor]

A fuel cell separator precursor can be produced by compressing the fuel cell separator conductive sheet of the present invention. Examples of the compression method include, but are not particularly limited to, a roll press, a flat plate press, and a belt press.

At this time, the conductive sheet may be impregnated with a resin having compatibility or affinity with the second organic fiber to form a fuel cell separator precursor. The resin having compatibility or affinity with the second organic fiber is not particularly limited as long as the resin has compatibility or affinity, but those having same ingredients are preferred from the viewpoint of suppressing the dispersion of the fibers in the conductive sheet. For example, when PE or PP is used as the second organic fiber, the resin having compatibility or affinity with the second organic fiber includes PE, PP, acid-modified PP, acid-modified PE, and the like.

When the resin having compatibility or affinity with the second organic fiber is impregnated, the amount of impregnation is such that the total of the second organic fiber and the resin having compatibility or affinity with the second organic fiber is preferably 0.1 to 50% by weight, and more preferably 0.1 to 30% by weight in the precursor. Further, impregnation is conducted so that a weight ratio of the total of the second organic fiber and the resin having compatibility or affinity with the second organic fiber to the first organic fiber is preferably 1 to 10, and more preferably 3 to 8.

Examples of the method for impregnating the resin having compatibility or affinity with the second organic fiber include a method of impregnating by heating and melting the resin to be impregnated, and a method of impregnating with a solution of the resin to be impregnated. From the viewpoint of uniformizing the amount of the resin to be impregnated and productivity, a method of impregnating by heating and melting the resin to be impregnated in the form of a sheet is preferred. By compression by the method described above after impregnation, a fuel cell separator precursor can be produced.

### [Fuel cell separator]

The fuel cell separator of the present invention can be produced by molding the fuel cell separator precursor by heating the separator precursor to a temperature that is lower than the melting point of the first organic fiber and higher than the melting point of the second organic fiber. The molding method is not particularly limited, but is preferably compression molding. The temperature at the time of compression molding (mold temperature) is lower than the melting point of the first organic fiber preferably by 10°C or more, more preferably by 20°C or more, and is higher than the melting point of the second organic fiber preferably by 10°C or more, more preferably by 20°C or more. The molding pressure is preferably 1 to 100 MPa, and more preferably 1 to 60 MPa.

By producing the fuel cell separator by the above method, the second organic fiber is melted at the time of molding, so that the moldability is improved and a fuel cell separator in which other ingredients are uniformly dispersed can be produced. In addition, since the first organic fiber remains in the form of fibers, the fuel cell separator of the present invention has improved strength even though the thickness is reduced to about 0.1 to 0.6 mm.

### EXAMPLES

Hereinafter, the present invention is described more specifically by Examples and Comparative Examples, however, the present invention is not limited to the following Examples. The materials used in the following Examples are as follows.
- Artificial graphite: average particle size 50 µm
- PAN-based carbon fiber: average fiber length 3.0 mm, average fiber diameter 7 µm
- Cellulose fiber: average fiber length 1.2 mm, average fiber diameter 25 µm
- Polypropylene (PP) fiber: average fiber length 0.9 mm, average fiber diameter 30 µm

### [1] Preparation of fuel cell separator conductive sheet

### [Example 1-1]

In water, 73 parts by weight of artificial graphite, 6 parts by weight of PAN-based carbon fiber, 4 parts by weight of cellulose fiber, and 17 parts by weight of PP fiber were put and stirred to obtain a fibrous slurry. Papermaking was performed with the slurry to prepare a conductive sheet A. The basis weight of the conductive sheet A was 264 g/m².

### [Example 1-2]

In water, 84 parts by weight of artificial graphite, 6 parts by weight of PAN-based carbon fiber, 5 parts by weight of cellulose fiber, and 5 parts by weight of PP fiber were put and stirred to obtain a fibrous slurry. Papermaking was performed with the slurry to prepare a conductive sheet B. The basis weight of the conductive sheet B was 229 g/m².

### [Comparative Example 1-1]

In water, 84 parts by weight of artificial graphite, 6 parts by weight of PAN-based carbon fiber, and 10 parts by weight of cellulose fiber were put and stirred to obtain a fibrous slurry. Papermaking was performed with the slurry to prepare a conductive sheet C. The basis weight of the conductive sheet C was 229 g/m².

### [2] Preparation of fuel cell separator

### [Example 2-1]

The conductive sheet A was placed at 185°C for 5 minutes to obtain a resin-impregnated precursor. The precursor was compression molded while the mold was naturally cooled from a mold temperature of 185°C to 100°C and the molding pressure was kept at 47 MPa, and thus a fuel cell separator A (thickness 0.15 mm) was obtained.

### [Example 2-2]

PP films (XF available from Okamoto Co., Ltd., thickness: 25 µm) were stacked on the upper and lower surfaces of the conductive sheet B, and placed at 185°C for 5 minutes to obtain a resin-impregnated precursor. The precursor was compression molded while the mold was naturally cooled from a mold temperature of 185°C to 100°C and the molding pressure was kept at 47 MPa, and thus a fuel cell separator B (thickness 0.15 mm) was obtained.

### [Comparative Example 2-1]

PP films (XF available from Okamoto Co., Ltd., thickness: 25 µm) were stacked on the upper and lower surfaces of the conductive sheet C, and placed at 185°C for 5 minutes to obtain a resin-impregnated precursor. The precursor was compression molded while the mold was naturally cooled from a mold temperature of 185°C to 100°C and the molding pressure was kept at 47 MPa, and thus a fuel cell separator C (thickness 0.16 mm) was obtained. Note that the target density was not reached at a pressure of 47 MPa.

### [Comparative Example 2-2]

A compound of PP and graphite was spread all over the mold, and the compound was compression molded while the mold was naturally cooled from a mold temperature of 185°C to 100°C and the molding pressure was kept at 47 MPa, and thus a fuel cell separator D (thickness: 0.20 mm) was obtained.

### [3] Evaluation of fuel cell separator conductive sheet

### (1) Evaluation of strength related to handleability

Tensile strength of each of the conductive sheets A to C was determined according to JIS K 7127 (Plastics -Test method for tensile properties-). Considering the handleability in the production process, a tensile strength of 8 N/40 mm or more is sufficient. The results are shown in Table 1.

### (2) Evaluation of moldability

As a result of compression molding at a molding pressure of 47 MPa, the one showing a density of ×0.9 or more of the theoretical density calculated from the molded product composition was evaluated as "○", and the one hot showing such a density was evaluated as "×". The results are shown in Table 1.

### [4] Evaluation of fuel cell separator

### (1) Evaluation of conductivity

Specific resistance of each of the fuel cell separators A to D was measured according to JIS H 0602 (Method for measuring resistivity by the four-probe method of silicon single crystal and silicon wafer). The results are shown in Table 1.

### (2) Evaluation of separator strength

Tensile strength of each of the fuel cell separators A to D was determined according to JIS K 7127 (Plastics -Test method for tensile properties-). The results are shown in Table 1.

**[Table 1]**

| | Fuel cell Separator | Conductive sheet | Sheet strength (N/40 mm) | Moldability | Separator strength (MPa) | Specific resistance (mΩ·cm) |
|---|---|---|---|---|---|---|
| Example 2-1 | A | A | 41 | ○ | 15 | 18 |
| Example 2-2 | B | B | 12 | ○ | 18 | 20 |
| Comparative Example 2-1 | C | C | 12 | × | 19 | 20 |
| Comparative Example 2-2 | D | - | - | ○ | 8 | 14 |

The results shown in Table 1 revealed that the conductive sheet of the present invention is excellent in moldability, has a strength that can be conveyed in a sheet form, is excellent in the strength of the thinned separator after molding, and has physical properties required for a fuel cell separator.

## Claims

1. A fuel cell separator conductive sheet comprising:
a conductive filler;
a first organic fiber; and
a second organic fiber,
wherein the first organic fiber has a melting point of higher than a heating temperature at which the conductive sheet is molded to produce a fuel cell separator, and
the second organic fiber has a melting point of lower than the heating temperature.

2. The fuel cell separator conductive sheet according to claim 1, wherein the first organic fiber is at least one selected from aramid, cellulose, acetate and nylon polyester, and the second organic fiber is at least one selected from polyethylene, polypropylene and polyphenylene sulfide.

3. The fuel cell separator conductive sheet according to claim 1 or 2, wherein the conductive filler is artificial graphite.

4. The fuel cell separator conductive sheet according to any one of claims 1 to 3, wherein the conductive filler has an average particle size of 5 to 200 µm.

5. The fuel cell separator conductive sheet according to any one of claims 1 to 4, wherein the first organic fiber and the second organic fiber have an average fiber length of 0.1 to 10 mm, and an average fiber diameter of 0.1 to 100 µm.

6. The fuel cell separator conductive sheet according to any one of claims 1 to 5, further comprising a conductive auxiliary agent.

7. The fuel cell separator conductive sheet according to claim 6, wherein the conductive auxiliary agent is fibrous.

8. The fuel cell separator conductive sheet according to claim 7, wherein the conductive auxiliary agent has an average fiber length of 0.1 to 10 mm and an average fiber diameter of 3 to 50 µm.

9. A fuel cell separator precursor obtained from the fuel cell separator conductive sheet according to any one of claims 1 to 8.

10. A fuel cell separator precursor obtained by impregnating the fuel cell separator conductive sheet according to any one of claims 1 to 8 with a resin.

11. A fuel cell separator obtained from the fuel cell separator precursor according to claim 9 or 10.

12. A method for producing a fuel cell separator conductive sheet, comprising a step of papermaking from a composition containing a conductive filler, a first organic fiber, and a second organic fiber, the first organic fiber having a melting point higher than a melting point of the second organic fiber.

13. A method for producing a fuel cell separator precursor, comprising a step of compressing the fuel cell separator conductive sheet according to any one of claims 1 to 8.

14. A method for producing a fuel cell separator precursor, comprising a step of impregnating the fuel cell separator conductive sheet according to any one of claims 1 to 8 with a resin, and compressing the fuel cell separator conductive sheet.

15. A method for producing a fuel cell separator, comprising a step of molding the fuel cell separator precursor according to claim 9 or 10 while heating the fuel cell separator precursor to a temperature that is lower than the melting point of the first organic fiber and higher than the melting point of the second organic fiber.
